# EUROPEAN PATENT APPLICATION

(11) **EP 1 961 295 A2**
(43) Date of publication of application: **27.08.2008**
(21) Application number: 08151433.3
(22) Date of filing: 14.02.2008
(51) Int. Cl.: A01K 13/00, A61D 9/00

(54) **Elastic bandage for horses' legs and relative method of realisation**

(30) Priority: 16.02.2007 IT BS20070020
(71) Applicant: Speroni, Monica, 25010 Centenaro (BS) (IT)
(72) Inventor: Benetti, Mauro, 25017, Lonato (Brescia) (IT)
(74) Representative: Pulieri, Gianluca Antonio

(57) **Abstract**

An elastic bandage (4) for horses' legs particularly suitable for protecting horses' legs without limiting their movement and without preventing transpiration. The application of the bandage does not cause rubbing or abrasion of the horses' legs.

## Description

The present invention relates to an elastic bandage, particularly suitable for being worn as a bandage on a horse's leg.

The use of elastic bandages on the legs of horses, aimed at preventing traumas and injuries of the horses' legs, especially when the animals are subjected to intense labour, is known of.

Specifically, such bandages also set out to protect and contain the movement of the tendons of the horses' legs.

Known state-of-the-art bandages foresee the use of a first bandage strip, or under bandage made from non-allergic, soft material to avoid causing abrasions on the horse's coat.

Such under bandage often fails to ensure the right compromise between protecting the leg and providing sufficient elasticity not to hinder the movements of the leg; as well as often causing excessive sweating of the horses' legs. As a result of the excessive sweating, the bandages tend to loosen or to slide down the leg, slipping towards the hoof.

Furthermore, in the known, state-of-the-art solutions, over the first bandage wound around the horse's leg a second elastic bandage in fabric is worn, able to cover the silicone portion and make the first bandage adhere more closely to the horse's leg.

The known state-of-the-art solutions present numerous drawbacks. For example they are inconvenient and complicated to fit onto the horse's leg, given that the first bandage is initially wound around and anchored to the leg, in direct contact with the horse's coat, and then a second elastic bandage in fabric is wound over the first. As a result the second bandage often tends to shift in relation to the first, for example on account of the horse sweating, and thus to loosen the bandaging. If the bandaging becomes loose, the bandage is no longer able to compress the tendons of the horse's leg sufficiently and the risk of injury increases.

The aim of the present invention is to produce a bandage for horses which overcomes the drawbacks referred to in relation to the technical note.

Such drawbacks and limitations are resolved by a bandage according to claim 1.

Other forms of embodiment of the bandage according to the invention are described in the subsequent claims.

Further characteristics and advantages of the present invention will be evident from the description below, made by way of an indicative and non-limiting example of its preferred embodiments, wherein:

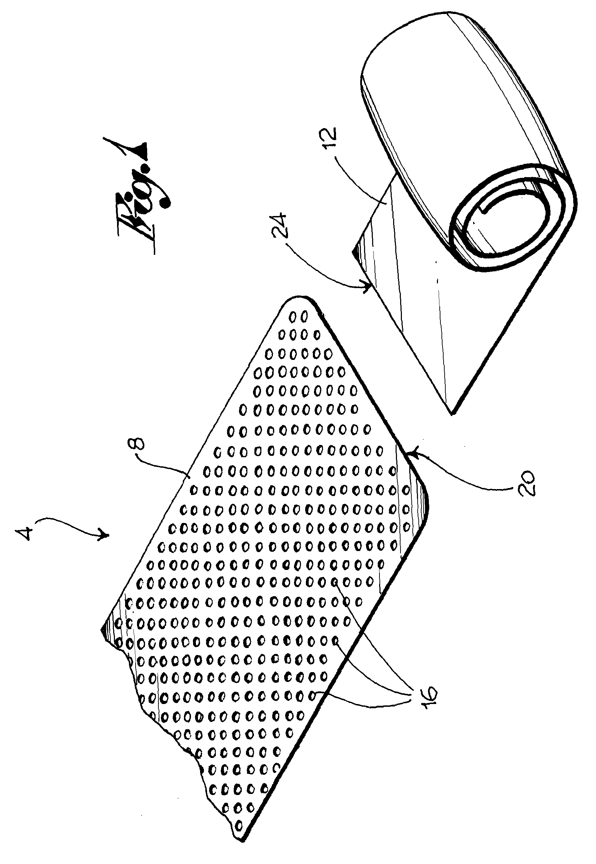

figure 1 shows a perspective view in separate parts of a bandage according to a form of embodiment of the present invention;

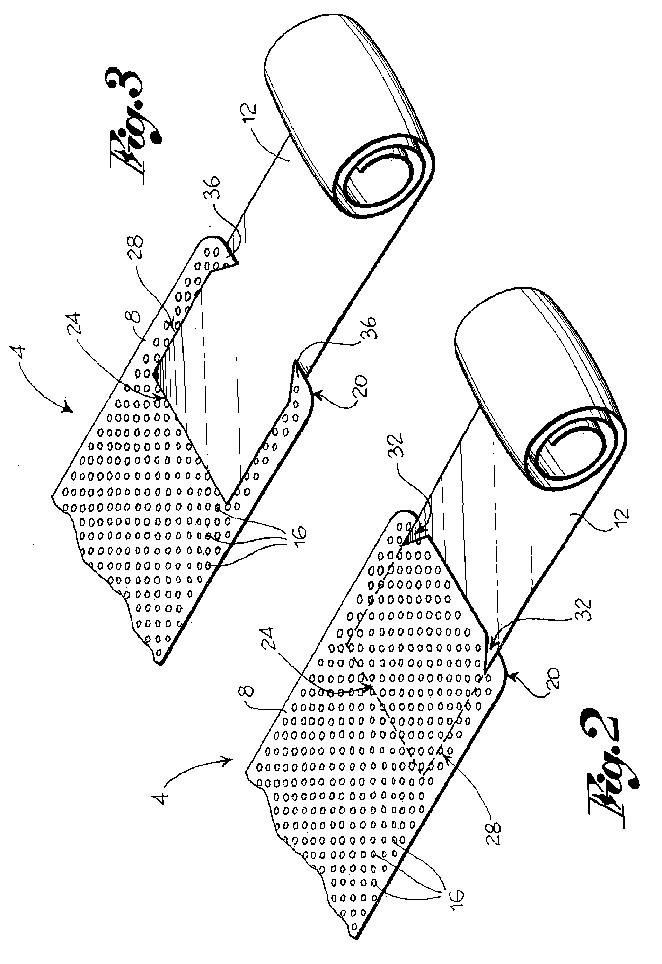

figure 2 shows a perspective view, in an assembled configuration, of the bandage in figure 1, from an angle showing the side of the bandage designed to be in direct contact with the horse's coat;

figure 3 shows a perspective view of the bandage in figure 1, in an assembled configuration, from an angle showing the side of the bandage opposite to that designed to be in direct contact with the horse's coat.

The elements or parts of elements common to the forms of embodiment described below will be denoted using the same reference numeral.

With reference to the aforesaid figures, reference numeral 4 globally denotes a bandage for horses' legs, suitable for wrapping around the legs of the horse.

According to one form of embodiment, said bandage 4 comprises a first bandage strip 8 suitable for winding directly onto the horse's coat, and to be covered by a second covering bandage strip 12.

Preferably, the first strip 8 is made from a silicone gel able to adhere to the horse's leg so as to conform to the morphology of the said limb.

Preferably, the first strip 8 has a number of holes 16 able to permit the transpiration of the horse's coat.

Advantageously, said holes 16 are of such a size as to improve the deformation capacity of the first strip 8 and the adaptation of the same to the morphology of the horse's leg.

Preferably, said holes 16 are evenly distributed over said first strip and contribute to lightening the weight of the first strip 8.

According to one form of embodiment, the bandage 4 comprises a first bandage strip 8 suitable for winding directly onto the horse's coat and a second bandage strip 12 suitable for covering and strengthening the compression of said first strip 8.

Advantageously, the first and second strips 8,12 are joined to each other at their respective first and second upper extremities 20,24.

Advantageously, the joining of said upper extremities 20,24 is made so as to be seamless.

According to one form of embodiment, the joining of said extremities 20,24 is performed by means of a co-moulding technique.

Preferably, said first and second upper extremities 20,24 overlay at least partially with the first and the second strip 12,8 respectively so that at the point of a hooking portion 28 of the strips 8,12, said strips are at least partially overlaid.

Preferably, the second upper extremity 24 of the second strip 12 is positioned on the part opposite the part of the strip placed against the horse's coat.

Preferably, the first upper extremity 20 comprises a pair of slots 32, on the side of the bandage suitable for placing directly against the horse's coat.

According to one form of embodiment, the first upper extremity 20, at the point of attachment with the second strip 12, comprises a pair of tabs 36, able to overlay at least partially the second strip 12, on the side opposite the part of the strip placed against the horse's coat.

Preferably, the width of the first strip 8 is greater or the same as the width of the second strip 12.

Advantageously, the second bandage strip 12 is an elastic strip.

For example, the second strip 12 is a strip of medical sheepskin, or wool or acrylic, or fleece, lycra or similar.

The method of producing a bandage according to the present invention will now be described.

Said method of realisation comprising the phases of predisposing a strip in silicone gel suitable for winding directly onto the horse's coat and making a number of holes in said strip in silicone gel so as to permit transpiration from the horse's coat.

The first strip 8 is then laid over the second strip 12 in elastic material with the relative upper extremities 20, 24 laid directly against each other.

Said upper extremities 20,24 are then joined so as to create a seamless joint.

Preferably, the assembly phase of the strips 8,12 is performed by means of a co-moulding technique of the said upper extremities 20,24, so as to incorporate at least partially a portion of the second strip inside the first strip in silicone gel.

As may be appreciated from this description, the bandage according to this invention makes it possible to overcome the drawbacks presented in the technical note.

In fact, the first strip in silicone gel means that the bandage can be perfectly adapted to the morphology of the horse's leg.

In addition, the presence of the holes limits the sweating of the horse and encourages transpiration from the leg. Moreover, the holes help to reduce the total weight of the bandage so as to reduce to a minimum the limitation of the movements of the horse.

In addition, the holes increase the elasticity of the bandage and make it easier to deform so as to mould perfectly to the morphology of the horse's leg.

In addition, the use of a seamless joint between the first and second strips prevents any rubbing or abrasion of the horse's leg.

In addition, thanks to the fact that the first and second bandage strips are in a single piece, the chances of the covering strip loosening are reduced.

According to a further advantage the bandage is easier to fit onto the leg than known state-of-the-art bandages, given that it is a single piece.

A technician skilled in this area, may make numerous modifications and adjustments to the bandages described above so as to satisfy contingent and specific requirements, all contained within the sphere of the invention as defined by the following claims.

## Claims

1. Bandage (4) for bandaging horses' legs comprising a first bandage strip (8) suitable for winding directly onto the horse's coat, and to be covered by a second covering bandage strip (12), **characterised by** the fact that
said first strip (8) is made from a silicone gel able to adhere to the horse's leg so as to conform to the morphology of the said limb.

2. Bandage (4) for bandaging according to claim 1, wherein said first bandage strip (8) has a number of holes (16) able to permit the transpiration of the horse's coat.

3. Bandage (4) for bandaging according to claims 1 or 2, wherein said holes (16) are of such a size as to make the first bandage strip (8) easier to deform and adapt to the morphology of the horse's leg.

4. Bandage (4) for bandaging horses' legs according to claims 2 or 3, wherein said holes (16) are evenly distributed over said first strip (8).

5. Bandage (4) for bandaging horses' legs according to any of the previous claims, comprising a first bandage strip (8) suitable for winding directly onto the horse's coat and a second bandage strip (12) suitable for covering and strengthening the compression of said first strip (8) **characterised by** the fact that said first and second strips (8,12) are joined to each other at the respective first and second upper extremities (20,24).

6. Bandage (4) for bandaging horses' legs according to claim 5, wherein the joint of said extremities (20,24) is made so as to prove seamless.

7. Bandage (4) according to claims 5 or 6, wherein the joining of said extremities (20,24) is performed using a co-moulding technique.

8. Bandage (4) according to claims 5, 6, or 7, wherein said first and second upper extremities (20,24) overlay at least partially with the first and the second strips (12,8) respectively so that at the point of a hooking portion (28) of the strips, said strips (8,12) are at least partially overlaid.

9. Bandage (4) according to any of the claims from 5 to 8, wherein the second upper extremity (24) of the second strip (12) is positioned on the part of the strip placed against the horse's coat.

10. Bandage (4) according to any of the claims from 5 to 9, wherein the first upper extremity (20) comprises a pair of slots (32), on the side of the bandage (4) suitable for applying directly onto the horse's coat.

11. Bandage (4) according to any of the claims from 5 to 10, wherein the first upper extremity (20), at the point of attachment with the second strip (12), comprises a pair of tabs (36), able to overlay at least partially the second strip (12), on the side opposite the part of the strip placed against the horse's coat.

12. Bandage (4) according to any of the previous claims, wherein the width of the first strip (8) is greater or the same as the width of the second strip (12).

13. Bandage (4) according to any of the previous claims, wherein the second strip (12) is an elastic strip.

14. Bandage (4) according to any of the previous claims, wherein the second strip (12) is a strip of medical sheepskin.

15. Method of realisation of a bandage (4) for bandaging horses' legs, comprising the phases of:
predisposing a first strip (8) in silicone gel suitable for winding directly onto the horse's coat, making a number of holes (16) in said first strip (8) in silicone gel so as to permit transpiration from the horse's coat.

16. Method of realisation of a bandage for bandaging according to claim 15, comprising the phases of:
predisposing a first strip (8) in silicone gel,
predisposing a second elastic strip (12),
placing against each other the respective upper extremities (20,24) of said strips (8,12),
joining said upper extremities (20,24) so as to create a seamless joint.

17. Method of realisation of a bandage for bandaging according to claim 16, comprising the co-moulding phase of said upper extremities (20,24) of the first and of the second strip (8,12), so as to incorporate at least partially a portion of the second strip (12) inside the first strip (8) in silicone gel.

18. Method of realisation of a bandage for bandaging according to any of the claims from 15 to 17, wherein said bandage is a bandage (4) according to any of the claims from 1 to 14.
